# EUROPÄISCHE PATENTSCHRIFT

(11) **EP 1 882 832 B1**
(45) Veröffentlichungstag und Bekanntmachung des Hinweises auf die Patenterteilung: **08.09.2010**
(21) Anmeldenummer: 07011012.7
(22) Anmeldetag: 05.06.2007
(51) Int. Cl.: F01N 3/20, F01N 3/28

(54) **Anordnung zur Verminderung von Stickoxiden in Abgasen**
Assembly for reducing nitrogen oxides in exhaust gases
Dispositif destiné à réduire les oxydes d'azote dans des gaz d'échappement

(30) Priorität: 08.07.2006 DE 102006031659
(43) Veröffentlichungstag der Anmeldung: 30.01.2008
(73) Patentinhaber: MAN Nutzfahrzeuge AG, 80995 München (DE)
(72) Erfinder: Döring, Andreas, 80339 München (DE); Walde, Florian, 90599 Dietenhofen (DE)

(56) Entgegenhaltungen:
- EP-A- 1 321 641
- WO-A-03/054364
- DE-A1- 10 360 955
- DE-C1- 4 310 962
- DE-U1-202005 008 146

## Beschreibung

Gegenstand der Erfindung ist eine Anordnung zur Verminderung von Stickoxiden im Abgas von Brennkraftmaschinen mit Hilfe von Ammoniak und/oder ammoniakabspaltenden Reduktionsmitteln gemäß dem Oberbegriff des Anspruches 1.

Stickoxide gehören zu den limitierten Abgaskomponenten, die während Verbrennungsvorgängen entstehen und deren erlaubte Emissionen immer weiter abgesenkt werden. Die Verringerung der Stickoxide geschieht dabei meist mit Hilfe von Katalysatoren. In sauerstoffreichem Abgas ist zusätzlich ein Reduktionsmittel erforderlich, um die Selektivität und die NOₓ -Umsätze anzuheben. Bekannt geworden sind diese Verfahren unter dem Sammelbegriff SCR-Verfahren, wobei SCR für "selektive katalytische Reduktion" steht. Ihr Einsatz erfolgt seit vielen Jahren im Kraftwerksbereich und in jüngster Zeit auch bei Brennkraftmaschinen. Eine ausführliche Darstellung solcher Verfahren ist der DE 34 28 232 A1 zu entnehmen. Als SCR-Katalysatoren können V₂O₅-haltige Mischoxide, beispielsweise in der Form V₂O₅/WO₃/TiO₂, verwendet werden. Typische V₂O₅-Anteile liegen dabei zwischen 0,2-3%. Als Reduktionsmittel kommen in der praktischen Anwendung Ammoniak oder Ammoniak abspaltende Verbindungen, wie Harnstoff oder Ammoniumformiat, in fester oder Lösungsform zum Einsatz. Für die Umsetzung von einem Mol Stickstoffmonoxid ist dabei ein Mol Ammoniak notwendig.

4NO+4NH₃+O₂ ⇒ 4N₂ +6H₂O (1)

Wird den SCR-Katalysatoren ein platinhaltiger NO-Oxidationskatalysator zur Bildung von NO₂ vorgeschaltet,

2NO+O₂ ⇔ 2NO₂ (2)

so kann die SCR-Reaktion erheblich beschleunigt und die Tieftemperaturaktivität merklich angehoben werden.

Besondere Probleme bereitet das SCR-Verfahren bei der Stickoxidreduzierung von Brennkraftmaschinen und hier speziell in Fahrzeugen, da darauf geachtet werden muss, dass es nicht zur Emission von unverbrauchtem Ammoniak kommt. Anders als im Kraftwerksbereich stehen in Fahrzeugen keine ausreichend genauen und haltbaren Abgassensoren zur Regelung des Systems und damit zur Vermeidung von NH₃-Emissionen bei Überdosierungen des Reduktionsmittels zur Verfügung. Zudem ist der Einsatz von V₂O₅ problematisch, da es bei Temperaturen über 650°C sublimiert, so dass in jüngster Zeit auch Zeolithe mit den Aktivkomponenten Eisen und/oder Kupfer und/oder Kobalt zum Einsatz kommen.

Um trotz fehlender Sensorik unerwünschte NH₃-Emissionen zu vermeiden, müssten ohne zusätzliche Maßnahmen die SCR-Katalysatoren deutlich überdimensioniert werden, um ausreichend Sicherheit gegenüber Ammoniakschlupf zu gewährleisten. Verbessern lässt sich die Situation, wenn dem SCR-Katalysator ein NH₃-Oxidationskatalyator nachgeschaltet wird. Eine solche Anordnung ist z. B. der DE 37 33 501 A1 zu entnehmen. Weiterhin ist es aus der EP 410 440 B1 bekannt, den SCR-Katalysator und den NH₃-Oxidationskatalysator auf einem gemeinsamen Träger auszubilden.

Als Aktivmaterial für den NH₃-Oxidationskatalysator können Edelmetalle der Platingruppe sowie deren Oxide zum Einsatz kommen. Die dem NH₃-Oxidationskatalysator zugedachte Aufgabe, überschüssiges NH₃ zu Stickstoff zu oxidieren, vermag dieser in der Praxis, wegen der zu geringen Selektivität der z. B. platinhaltigen aktiven Komponente nur unzureichend zu lösen, so dass die Oxidation, wie in den nachfolgenden Formeln gezeigt, nicht bei der Oxidationsstufe [0], sondern bei der Oxidationsstufe [+1], [+2] oder gar erst [+4] endet und somit wieder Stickoxide entstehen.

4NH₃+3O₂ ⇒ 2N₂+6H₂O [0] (3)

2 NH₃+2,5 O₂ ⇒ 2 NO + 3 H₂O [+2] (4)

2NO+O₂ ⇔ 2NO₂ [+4] (5)

NH₃ +NO₂ ⇒ 2NO+H₂O [+2] (6)

Hinzu kommt, dass die als Aktivmaterial für den NH₃-Oxidationskatalysator verwendeten Platinmetalle (Platin, Palladium, Rhodium, Iridium, Osmium, Ruthenium) sowie ihre Oxide sehr teuer und selten sind. Aus diesem Grund werden die NH₃-Oxidationskatalysatoren meist sehr klein ausgelegt, was dazu führt, dass diese oft überlastet werden, so dass es nicht zu einem vollständigen NH₃-Umsatz kommt.

Es ist Aufgabe der Erfindung, eine Anordnung anzugeben, die einerseits Ammoniakschlupf zuverlässig verhindert und andererseits die restlichen im Abgas enthaltenen Stickoxide auf ein Minimum reduziert.

Die erfindungsgemäße Anordnung löst das Problem in vorteilhafter Weise dadurch, dass stromab des NH₃-Oxidationskatalysators wenigstens ein zweiter Katalysator mit SCR-Aktivität nachgeschaltet ist und so die am NH₃-Oxidationskatalysator durch mangelnde Selektivität des Katalysators gebildeten Stickoxide wieder mit noch nicht oxidiertem NH₃ reagieren und damit reduziert werden können.

Eine weitere vorteilhafte Verbesserung des Systems besteht darin, stromab des zweiten SCR-Katalysators wenigstens einen zweiten NH₃-Oxidationskatalysator vorzusehen, um die NH₃-Mengen die hinter dem SCR-Katalysator noch auftreten ebenfalls zu oxidieren. Diese alternierende Anordnung von SCR-Katalysatoren und / NH₃-Oxidationskatalysatoren kann beliebig oft wiederholt werden und trägt in vorteilhafter Weise zur Stabilität des Gesamtsystems bei.

Es kann auch weiterhin von Vorteil sein, unterschiedliche Katalysatorzusammensetzungen für die einzelnen SCR-Katalysatoren und NH₃-Oxidationskatalysatoren zu verwenden und so die einzelnen Katalysatoren auf die in dem jeweiligen Bereich anfallenden NO_{X} - und NH₃-Mengen sowie Abgastemperaturen zu optimieren. Dies bedeutet beispielsweise, dass der erste SCR-Katalysator und der erste NH₃-Oxidationskatalysator auf hohe Selektivität hinsichtlich der Umsetzung der Ausgangsprodukte in N₂ optimiert werden, da hier die höchsten Konzentrationen der Edukte NOₓ und NH₃ vorliegen und damit auch die höchsten Konzentrationen an unerwünschten Nebenprodukten der Reaktion, wie NO, N₂O oder NO₂ zu erwarten sind. Die nachfolgenden SCR-Katalysatoren und NH₃-Oxidationskatalysatoren können dagegen auf Umsatz und weniger auf Selektivität optimiert werden.

Als SCR-Katalysatoren können vorteilhaft V₂O₅-haltige Mischoxide, beispielsweise in der Form V₂O₅/ WO₃/TiO₂, verwendet werden. Typische V₂O₅-Anteile liegen dabei zwischen 0,2-5%. Weiterhin vorteilhaft ist die Verwendung von zeolithbasierten Katalysatoren, die als Aktivkomponenten Eisen und/oder Kupfer und/oder Kobalt und/oder deren Oxide, enthalten.

Für die NH₃-Oxidationskatalysatoren ist der Einsatz folgender Metalle und ihrer Oxide von Vorteil: Platin und/oder Palladium und/oder Iridium und/oder Rhodium und/oder Kupfer und/oder Nickel. Auch diese Aktivkomponenten können in eine Zeolithmatrix eingebettet sein.

Als Zeolithe sowohl für die Einbettung der Aktivkomponenten mit SCR-Aktivität als auch der Aktivkomponenten mit NH3-Oxidationsaktivität kommen vorteilhaft solche der Typen ZSM-5 und/oder OSI und/oder EPI und/oder AEN und/oder MFI und/oder FAU und/oder BEA zum Einsatz.

Die Katalysatoren können dabei sowohl als Vollkatalysatoren, aber auch als Beschichtungskatalysatoren ausgeführt werden.

Um die Kosten der erfindungsgemäßen Katalysatoranordnung zu verringern, ist es weiter von Vorteil, die alternierend angeordneten SCR-Katalysatoren und NH₃-Oxidationskatalysatoren mit ihren unterschiedlichen Katalysatorzusammensetzungen auf einen gemeinsamen Träger aufzubringen.

Das Verfahren zur Herstellung der Katalysatorzusammensetzungen sieht, abhängig vom Ausgangsmaterial, unterschiedliche Vorgehensweisen vor. So kann die unterschiedliche Katalysatorzusammensetzung vorteilhaft durch Tauchen eines Trägers in unterschiedliche, den jeweiligen Katalysator enthaltende Lösung aufgebracht, getrocknet und anschließend kalziniert werden. Eine weitere vorteilhafte Vorgehensweise sieht vor, die unterschiedlichen Katalysatorzusammensetzungen durch Imprägnieren einer bereits auf einem Träger aufgebrachten Katalysatorschicht oder durch Imprägnieren eines Vollkatalysators zu erzeugen. Bei Verwendung von Metallfolien als Träger ist es dagegen von Vorteil, die einzelnen Folien vor dem Aufrollen durch Besprühen oder Bestreichen zu beschichten, einer einen Trockenvorgang beinhaltendenden Endbehandlung zu unterziehen und erst dann zu einem Wabenkörper aufzurollen.

Beispiele der erfindungsgemäßen Anordnung sowie das Verfahren sind nachfolgend unter Zuhilfenahme der Zeichnungen näher erläutert, es zeigen:
- Fig. 1.: Eine Anordnung zur selektiven katalytischen Reduktion von Abgasen
- Fig. 2.: Eine Kombination aus zwei SCR-NH₃-Oxidations-Katalysatoranordnungen
- Fig. 3: Eine Katalysatoranordnung mit mehreren Kombinationen aus SCR-Katalysator und NH₃-Oxidationskatalysator
- Fig. 4: Die Anordnung ähnlich der aus Fig. 2 auf einem gemeinsamen Träger
- Fig. 5: Eine Tabelle zur Veranschaulichung der zahlenmäßigen Verhältnisse

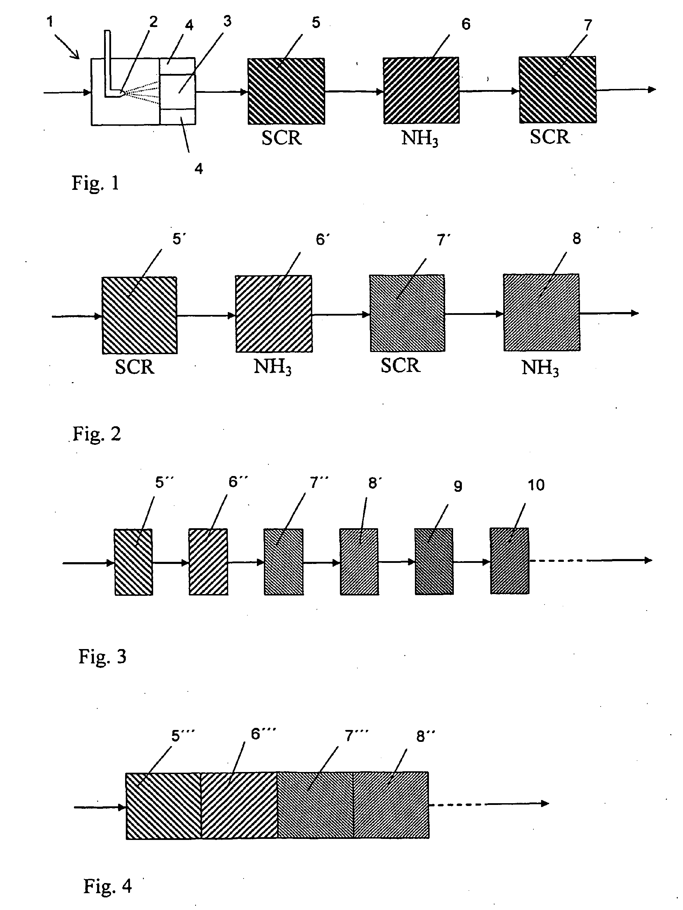

Eine Anordnung zur selektiven katalytischen Reduktion ist schematisch dargestellt in Fig. 1 gezeigt. Die von einer Brennkraftmaschine (nicht dargestellt) durch die Verbrennungsvorgänge erzeugten Abgase, in Fig. 1 durch die Pfeile symbolisiert, gelangen zunächst in einen Abgasaufbereitungstrakt 1, in welchem dem heißen Abgas ein Reduktionsmittel möglichst motornah beigegeben wird. Bei dem Reduktionsmittel handelt es sich, wie bei Kraftfahrzeugen mit SCR-Katalysator in der Praxis gebräuchlich, um eine wässrige Harnstofflösung, selbstverständlich ist aber auch die Zugabe von Harnstoff in fester Form denkbar, wie dies in der einschlägigen Fachliteratur bereits ausführlich beschrieben ist. Die Zumessung erfolgt in Abhängigkeit von Betriebsparametern der Brennkraftmaschine, gesteuert über eine Motorsteuereinheit (nicht dargestellt), in der Weise, dass über eine Düse 2 die wässrige Harnstofflösung unmittelbar vor einem Hydrolysekatalysator 3 in den Abgasstrom eingesprüht wird. Die Aufgabe des Hydrolysekatalysators 3 ist es, die wässrige Harnstofflösung unter Vermeidung von Nebenprodukten möglichst vollständig in Ammoniak und Wasserdampf überzuführen. Unter bestimmten Voraussetzungen erfolgt diese Aufspaltung auch ohne Hydrolysekatalysator hinreichend, so dass dieser dann entfallen kann. Parallel zum Hydrolysekatalysator 3 ist ein Oxidationskatalysator 4 angeordnet, dessen Aufgabe darin besteht, nach der vorstehend mit (2) bezeichneten Reaktion einen Teil des im Abgas enthaltenen Stickstoffmonoxid mittels des im Abgas vorhandenen überschüssigen Sauerstoff zu Stickstoffdioxid aufzuoxidieren, das in der nachfolgenden SCR-Reaktion wesentlich reaktionsfreudiger ist. Die eigentliche selektive katalytische Reduktion der Stickoxide erfolgt in stromab zum Abgasaufbereitungstrakt 1 gelegenen SCR-Katalysator 5, der einen möglichst großen Anteil der im Abgas vorhandenen Stickoxide (NO_{X}) in Stickstoff und Wasserdampf überführen soll, ohne dass überschüssiger Ammoniak (NH₃) im Abgasstrom verbleibt. In Anbetracht der ständig wechselnden Betriebsbedingungen einer in einem Kraftfahrzeug betriebenen Brennkraftmaschine ist offensichtlich, dass die gewünschte Umsetzung nur unvollkommen gelingen kann. Um in solchen Fällen ungenügender Umsetzung zu verhindern, dass giftiger Ammoniak mit dem teilgereinigten Abgas an die Außenluft abgegeben wird, ist dem SCR-Katalysator ein NH₃-Oxidationskatalysator 6 nachgeordnet, der das überschüssige NH₃ in Stickstoff und Wasserdampf überführen soll. Diese Oxidationsreaktion geschieht allerdings nicht selektiv genug, so dass, wie bereits ausgeführt, wiederum Stickoxide entstehen (vergl. dazu die Reaktionen (3) bis (6)). Um dieses erneute Ansteigen der Stickoxide zu vermeiden hat es sich als geeignet herausgestellt, dem NH₃-Oxidationskatalysator 6 einen zweiten SCR-Katalysator 7 nachzuschalten, der die im NH₃-Oxidationskatalysator 6 neu gebildeten Stickoxide mit dem im Abgas vorhandenen Restammoniak in Stickstoff und Wasserdampf überführt. Dies setzt allerdings voraus, das die Dimensionierung des NH₃-Oxidationskatalysators 6 bzw. die Zumessung der wässrigen Harnstofflösung so getroffen ist, dass ein geringer Anteil Ammoniak auch nach dem NH₃-Oxidationskatalysator 6 im Abgas vorhanden ist.

Um zu verhindern, dass in dem nachgeordneten SCR-Katalysator eventuell nicht vollständig umgesetzter Ammoniak in die Umgebungsluft gelangt, kann dem zweiten SCR-Katalysator ein zweiter NH₃-Oxidationskatalysator nachgeordnet sein. Eine solche Anordnung zeigt Fig. 2 in vereinfachter Darstellung. Auf die erneute Darstellung des Abgasaufbereitungstraktes wird in dieser Darstellung, wie auch in den folgenden Darstellungen verzichtet, es wird vielmehr auf die entsprechenden Ausführungen in Verbindung mit der Darstellung in Figur 1 verwiesen. An die dargestellte Kombination aus einem ersten SCR-Katalysator 5' und einem ersten NH₃-Oxidationskatalysator 6' schließt sich im Beispiel nach Fig. 2 eine weitere Kombination aus einem zweiten SCR-Katalysator 7' und einem zweiten NH₃-Oxidationskatalysator 8 an. Die aufgezeigte Abfolge von zwei gleichartigen Katalysator-Kombinationen eröffnet die Möglichkeit, durch die Wahl unterschiedlicher aktiver Materialien für die einzelnen Katalysatoren, die Umsetzungsreaktionen weiter zu optimieren, so ist es sinnvoll, die erste Katalysatorstufe auf hohe Selektivität auszulegen, dies bedeutet insbesondere, dass die im NH₃-Oxidationskatalysator 6' ablaufende Reaktion möglichst bei der Oxidationsstufe [0] enden soll. Durch die geeignete Wahl des Katalysatormaterials kann hier Einfluss genommen werden, so weist Iridium eine höhere Selektivität auf als Platin, mit Platin als Katalysatormaterial dagegen steigt die Umsetzungsrate. Setzt man also im ersten NH₃-Oxidationskatalysator 6' Iridium, Iridiumoxid oder ein Material mit Iridiumanteilen als aktives Katalysatormaterial ein, wird die Umsetzung der Ausgangsprodukte in Stickstoff optimiert werden, da an dieser Stelle der Anordnung eine hohe Konzentrationen der Edukte NOₓ und NH₃ vorliegen und damit auch die höchsten Konzentrationen an unerwünschten Nebenprodukten der Reaktion, wie NO, N₂O oder NO₂ zu erwarten wäre, wenn die Reaktion weniger selektiv abliefe. Der nachfolgenden zweite SCR-Katalysatoren 7' und der NH₃-Oxidationskatalysatoren 8 können dagegen auf die Umsatzrate und weniger auf Selektivität optimiert werden. Insbesondere ist der zweite NH₃-Oxidationskatalysator 8 durch die Verwendung von Platin, Platinoxid oder einem Material mit Platinanteilen auf eine hohe Umsatzrate ausgelegt.

Die vorstehend angesprochenen Materialangaben hinsichtlich der aktiven Komponenten der NH₃-Oxidationskatalysatoren sind natürlich nur Beispiele, zumal das tatsächliche Katalysatorverhalten zu einem großen Teil auch von dem Trägermaterial abhängt, auf das das aktive Katalysatormaterial aufgebracht ist. Dies trifft natürlich auch auf die SCR-Katalysatoren zu. Hier kann der SCR-Katalysator 5' z. B. ein zeolithbasierte Katalysator sein, der als Aktivkomponenten Eisen und/oder Kupfer und/oder Kobalt und/oder deren Oxide enthält. Für den zweiten SCR-Katalysator 7' kommt V₂O₅-haltige Mischoxide, beispielsweise in der Form V₂O₅/WO₃/TiO₂, als aktives Katalysatormaterial in Frage, auch deshalb, weil an dieser Stelle der Anordnung die Abgastemperatur unter allen Betriebsbedingungen die Temperatur von 650°C nicht überschreitet, oberhalb derer V₂O₅ sublimiert.

Selbstverständlich besteht die Möglichkeit, mehr als zwei Katalysatorkombinationen in einer Katalysatoranordnung zusammenzufassen. Ein entsprechendes Beispiel zeigt Fig. 3 in Prinzipdarstellung. Dort folgt einer ersten Katalysatorkombination aus SCR-Katalysator 5" und NH₃-Oxidationskatalysator 6" eine zweite Katalysatorkombination aus einem zweiten SCR-Katalysator 7" und einem zweiten NH₃-Oxidationskatalysator 8', der eine dritte Katalysatorkombination aus einem dritten SCR-Katalysator 9 und einem dritten NH₃-Oxidationskatalysator 10 nachgeordnet ist. Die vorstehend aufgezeigte alternierende Abfolge von SCR-Katalysatoren und NH₃-Oxidationskatalysatoren lässt sich natürlich noch weiter fortsetzen, die Anordnung kann dabei sowohl mit einem SCR-Katalysator als auch mit einem NH₃-Oxidationskatalysator enden. Eine alternierende Abfolge von Katalysatoren, wie sie vorstehend beschrieben ist, wirkt sich stabilisierend auf das Gesamtsystem aus. Auch für diese Anordnung gilt die in Verbindung mit Figur 2 beschriebene Optimierungsmöglichkeit durch gezielte Auswahl der aktiven Katalysatormaterialien dahingehend, dass in Richtung stromab die Selektivität der Reaktionen abnimmt, die Umsatzrate dagegen steigt.

Weiter besteht die Möglichkeit, die vorstehend beschriebenen Katalysatoranordnungen auf einem gemeinsamen Träger anzuordnen. So zeigt Fig. 4 vereinfacht dargestellt eine erste Kombination aus einem SCR-Katalysator 5"' und einem NH₃-Oxidationskatalysator 6"' die zusammen mit einer zweiten Kombination aus einem weiteren SCR-Katalysator 7"' und einem weiteren NH₃-Oxidationskatalysator 8" auf einem gemeinsamen Träger angeordnet sind. Als Träger kommen z. B. Metallfolien in Frage, die mit der vorstehend beschriebenen Abfolge entsprechend aktiver Katalysatorkomponenten beschichtet sind.

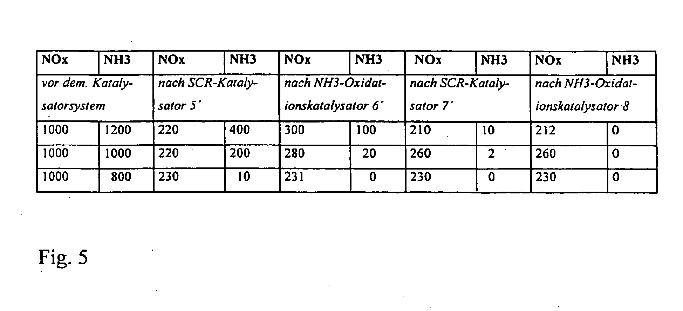

Zur Veranschaulichung der zahlenmäßigen Verhältnisse sind in der in Fig. 5 gezeigten Tabelle für vorgegebene NH₃-Konzentrationen vor dem Katalysatorsystem die sich ergebenden NOₓ - und NH₃-Konzentrationen (in ppm), die bei einem SCR- NH₃-SCR- NH₃-Katalysatorsystem nach Fig. 2 hinter den jeweiligen Katalysatoren auftreten, beispielhaft dargestellt. So ergibt sich bei unterstöchiometrischer Zugabe von Ammoniak (800ppm) bereits hinter dem ersten SCR-Katalysator 5' eine Emission von 230ppm NOₓ, sowie 10ppm NH₃. Dieses NH₃ kann am ersten NH₃-Oxidationskatalysator 6' einfach oxidiert werden, eine nennenswerte NOₓ -Zunahme findet nicht statt. Die nachgeschalteten Katalysatoren (zweiter SCR-Katalysator 7' und zweiter NH₃-Oxidationskatalysator 8) leisten in diesem Fall keinen Beitrag mehr zur Verringerung der NO_{X} - oder NH₃-Mengen. Wird dagegen die NH₃-Konzentration auf 1000ppm angehoben, steigt nach dem ersten NH₃-Oxidationskatalysator die NOₓ -Konzentration von 220ppm auf nun 280ppm, gleichzeitig sinkt die NH₃-Konzentration von 200ppm auf 20ppm. Mit diesen 20ppm Ammoniak kann die NOₓ -Konzentration am nachgeschalteten zweiten SCR-Katalysator 7' auf 260ppm verringert werden. Die anschließende Oxidation von 2ppm NH₃ am zweiten NH₃-Oxidationskatalysator 8 verläuft vollständig. Noch deutlicher fallen die Ergebnisse bei überstöchiometrischer Zugabe (1200ppm) von NH₃ aus. Hier gelingt es, die NOₓ -Konzentrationen hinter dem Gesamtsystem auf 212ppm und NH₃=0 abzusenken. Das Beispiel zeigt, dass, bei geringfügig überstöchiometrischer Zugabe von NH₃, mit der erfindungsgemäßen Katalysatoranordnung optimale Ergebnisse hinsichtlich der selektiven Reduktion von Stickoxiden zu Stickstoff zu erzielen sind, ohne dass ein Ammoniakschlupf zu befürchten wäre.

Hinsichtlich der Fertigungsverfahren für die vorstehend beschriebenen Katalysatoranordnungen kommen alle in Verbindung mit den Einzelkatalysatoren bereits bekannten Fertigungsverfahren in Frage, die Katalysatoren können dabei sowohl als Vollkatalysatoren, aber auch als Beschichtungskatalysatoren ausgeführt werden.

Als SCR-Katalysatoren können vorteilhaft V₂O₅-haltige Mischoxide, beispielsweise in der Form V₂O₅/ WO₃/TiO₂, verwendet werden. Typische V₂O₅-Anteile liegen dabei zwischen 0,2-5%. Weiterhin ist die Verwendung von zeolithbasierten Katalysatoren, die als Aktivkomponenten Eisen und/oder Kupfer und/oder Kobalt und/oder deren Oxide enthalten, möglich.

Für die NH₃-Oxidationskatalysatoren ist der Einsatz folgender Metalle und ihrer Oxide von Vorteil: Platin und/oder Palladium und/oder Iridium und/oder Rhodium und/oder Kupfer und/oder Nickel und/ oder alle übrigen Metalle aus der Platingruppe. Auch diese Aktivkomponenten können in eine Zeolithmatrix eingebettet sein.

Soweit im Vorstehenden Zeolithe erwähnt sind, ist anzumerken, dass sich für die hier relevanten Anwendungsfälle solche der Typen ZSM-5 und/oder OSI und/oder EPI und/oder AEN und/oder MFI und/oder FAU und/oder BEA besonders eignen.

Insbesondere bei der Anordnung mehrerer Katalysatoren auf einem Träger können die unterschiedlichen Katalysatorzusammensetzungen durch Tauchen des Trägers in unterschiedliche, den Katalysator enthaltende Lösung aufgebracht, getrocknet und anschließend kalziniert werden. Weiter ist es möglich, die unterschiedlichen Katalysatorzusammensetzungen durch Imprägnieren einer bereits auf einem Träger aufgebrachten Katalysatorschicht oder durch Imprägnieren eines Vollkatalysators herzustellen. Bei der Verwendung von Metallfolien als Träger bietet es sich an, die einzelnen Folien vor dem Aufrollen durch partielles Besprühen oder Bestreichen mit den unterschiedlichen Katalysatormaterialien zu beschichten und einer einen Trockenvorgang beinhaltenden Endbehandlung zu unterziehen, erst dann erfolgt das Aufwickeln zu einem Wabenkörper.

## Patentansprüche

1. Anordnung zur Verminderung von Stickoxiden im Abgas von Brennkraftmaschinen mit Hilfe von Ammoniak und/oder ammoniakabspaltenden Reduktionsmitteln, wobei Ammoniak und/ oder ammoniakabspaltendes Reduktionsmittel vor einer Katalysatorkombination aus einem SCR-Katalysator (5, 5', 5", 5"') und einem nachgeordneten NH₃-Oxidationskatalysator (6, 6', 6", 6"') dem Abgasstrom beigegeben werden, derart, dass vor dem SCR-Katalysator (5, 5', 5", 5"') ein Gemisch aus Abgas und Ammoniak vorliegt, **dadurch kennzeichnet, dass** die zugegebene Menge an Reduktionsmittel und die Dimensionierung des NH₃-Oxidationskatalysators (6, 6', 6", 6"') so getroffen sind, dass stromab des NH₃-Oxidationskatalysators (6, 6', 6", 6"') eine Restmenge Ammoniak im Abgas verbleibt und dass stromab des NH₃-Oxidationskatalysators (6, 6', 6", 6"') wenigstens ein zweiter SCR-Katalysator (7, 7', 7", 7"') nachgeschaltet ist, der die Restmenge Ammoniak mit den am NH₃-Oxidationskatalysators (6, 6', 6", 6"') gebildeten Stickoxiden in Stickstoff und Wasserdampf überführt.

2. Anordnung nach Anspruch 1, **dadurch gekennzeichnet, dass** stromab des zweiten SCR-Katalysators (7', 7", 7"') wenigstens ein zweiter NH₃-Oxidationskatalysator (8, 8', 8") nachgeschaltet ist.

3. Anordnung nach Anspruch 2, **dadurch gekennzeichnet, dass** dem zweiten NH₃-Oxidationskatalysator (8') wenigstens ein weiterer SCR-Katalysator (9) oder weitere SCR-Katalysatoren (9) und NH₃-Oxidationskatalysatoren (10) in alternierender Abfolge nachgeordnet sind wobei die Anordnung mit einem SCR-Katalysator oder einem NH₃-Oxidationskatalysator endet.

4. Anordnung nach einem der vorhergehenden Ansprüche, **dadurch gekennzeichnet, dass** die Zusammensetzungen der jeweiligen SCR-Katalysatoren (5, 7 bzw. 5', 7', bzw. 5", 7", 9 bzw. 5"', 7"') entlang der Strömungsrichtung der Abgase unterschiedlich sind.

5. Anordnung nach einem der vorhergehenden Ansprüche, **dadurch gekennzeichnet, dass** die Zusammensetzungen der jeweiligen NH₃-Oxidationskatalysatoren (6', 8 bzw. 6", 8', 10 bzw. 6"', 8") entlang der Strömungsrichtung unterschiedlich sind.

6. Anordnung nach einem der vorhergehenden Ansprüche, **dadurch gekennzeichnet, dass** die erste Kombination aus SCR-Katalysator (5, 5', 5", 5"') und NH₃-Oxidarionskatalysator (6, 6', 6", 6"') durch die eingesetzten aktiven Katalysatormaterialien auf Selektivität optimiert ist und dass die nachfolgenden weiteren SCR-Katalysatoren (7, 7', 7", 7"', 9) und NH₃-Oxidationskatalysatoren (8, 8', 8", 10) durch die eingesetzten aktiven Katalysatormaterialien auf hohe Umsatzraten optimiert sind.

7. Anordnung nach einem der Ansprüche 1 bis 6, **dadurch gekennzeichnet, dass** zumindest ein Teil der SCR-Katalysatoren (5, 5', 5", 5"', 7, 7', 7", 7"', 9) V₂O₅ als Aktivkomponente enthält.

8. Anordnung nach einem der Ansprüche 1 bis 6, **dadurch gekennzeichnet, dass** zumindest ein Teil der SCR-Katalysatoren (5, 5', 5 ", 5"', 7, 7', 7", 7"', 9) eisen- und/oder kupfer- und/oder kobalthaltige Zeolithe enthält.

9. Anordnung nach Anspruch 8, **dadurch gekennzeichnet, dass** die Zeolithe vom Typ ZSM-5 und/oder OSI und/oder EPI und/oder AEN und/oder MFI und/oder FAU und/oder BEA sind.

10. Anordnung nach einem der Ansprüche 1 bis 6, **dadurch gekennzeichnet, dass** die NH₃-Oxidationskatalysatoren (6, 6', 6", 6"', 8, 8', 8", 10) als Aktivkomponenten Platin und/oder Palladium und/oder Rhodium und/oder Iridium und/oder deren Oxide enthalten.

11. Anordnung nach einem der Ansprüche 1 bis 6, **dadurch gekennzeichnet, dass** die SCR-Katalysatoren (5, 5', 5 ", 5"', 7, 7', 7", 7"', 9) und/ oder NH₃-Oxidationskatalysatoren (6, 6', 6", 6"', 8, 8', 8", 10) Vollkatalysatoren oder Beschichtungskatalysatoren auf Metallträger oder Keramikträger sind.

12. Anordnung nach einem der Ansprüche 1 bis 6, **dadurch gekennzeichnet, dass** die SCR-Katalysatoren (5"', 7"') und NH₃-Oxidationskatalysatoren (6"', 8") auf einen gemeinsamen Träger aufgebracht sind.

## Claims

1. An arrangement for reducing nitrogen oxides in the exhaust of internal combustion engines with the aid of ammonia and/or reducing agents which split off ammonia, with ammonia and/or reducing agents which split off ammonia being added to the exhaust stream before a catalyst combination consisting of an SCR catalyst (5, 5', 5", 5"') and a subsequent NH₃ oxidation catalyst (6, 6', 6", 6"'), such that a mixture of exhaust and ammonia is present before the SCR catalyst (5, 5', 5", 5"'), **characterised in that** the added amount of reducing agent and the dimensioning of the NH₃ oxidation catalyst (6, 6', 6", 6"') are such that a residual amount of ammonia remains in the exhaust downstream from the NH₃ oxidation catalyst (6, 6', 6", 6"'), and **in that** at least a second SCR catalyst (7, 7', 7", 7"') is inserted downstream from the NH₃ oxidation catalyst (6, 6', 6", 6"'), which second SCR catalyst converts the residual amount of ammonia with the nitrogen oxides formed at the NH₃ oxidation catalyst (6, 6', 6", 6"') into nitrogen and water vapour.

2. An arrangement according to Claim 1, **characterised in that** at least a second NH₃ oxidation catalyst (8, 8', 8") is inserted downstream from the second SCR catalyst (7', 7", 7"').

3. An arrangement according to Claim 2, **characterised in that** at least one further SCR catalyst (9) or further SCR catalysts (9) and NH₃ oxidation catalysts (10) succeed the second NH₃ oxidation catalyst (8') in an alternating sequence, the arrangement ending with an SCR catalyst or an NH₃ oxidation catalyst.

4. An arrangement according to one of the preceding claims, **characterised in that** the compositions of the respective SCR catalysts (5, 7 or 5', 7' or 5", 7", 9 or 5"', 7"') differ along the direction of flow of the exhaust gases.

5. An arrangement according to one of the preceding claims, **characterised in that** the compositions of the respective NH₃ oxidation catalysts (6', 8 or 6", 8', 10 or 6"', 8") differ along the direction of flow.

6. An arrangement according to one of the preceding claims, **characterised in that** the first combination of SCR catalyst (5, 5', 5", 5"') and NH₃ oxidation catalyst (6, 6', 6", 6"') is optimised for selectivity by the active catalyst materials used, and **in that** the subsequent further SCR catalysts (7, 7', 7", 7"', 9) and NH₃ oxidation catalysts (8, 8', 8", 10) are optimised for high conversion rates by the active catalyst materials used.

7. An arrangement according to one of Claims 1 to 6, **characterised in that** at least some of the SCR catalysts (5, 5', 5", 5"', 7, 7', 7", 7"', 9) contain V₂O₅ as active constituent.

8. An arrangement according to one of Claims 1 to 6, **characterised in that** at least some of the SCR catalysts (5, 5', 5", 5"', 7, 7', 7", 7"', 9) contain iron-containing and/or copper-containing and/or cobalt-containing zeolites.

9. An arrangement according to Claim 8, **characterised in that** the zeolites are of the type ZSM-5 and/or OSI and/or EPI and/or AEN and/or MFI and/or FAU and/or BEA.

10. An arrangement according to one of Claims 1 to 6, **characterised in that** the NH₃ oxidation catalysts (6, 6', 6", 6"', 8, 8', 8", 10) contain platinum and/or palladium and/or rhodium and/or iridium and/or their oxides as active constituents.

11. An arrangement according to one of Claims 1 to 6, **characterised in that** the SCR catalysts (5, 5', 5", 5"', 7, 7', 7", 7"', 9) and/or NH₃ oxidation catalysts (6, 6', 6", 6"', 8, 8', 8", 10) are solid catalysts or coating catalysts on metal supports or ceramic supports.

12. An arrangement according to one of Claim 1 to 6, **characterised in that** the SCR catalysts (5"', 7"') and NH₃ oxidation catalysts (6"', 8") are applied to a common support.

## Revendications

1. Dispositif destiné à réduire les oxydes d'azote dans les gaz d'échappement de moteurs à combustion interne à l'aide d'ammoniac et/ou d'agents réducteurs donnant de l'ammoniac,
dans lequel
l'ammoniac et/ou les agents réducteurs donnant de l'ammoniac, sont introduits dans la veine des gaz d'échappement en amont d'une combinaison de catalyseurs comprenant: un catalyseur SCR (5, 5', 5", 5"') et en aval un catalyseur d'oxydation NH₃ (6, 6', 6", 6"'), de façon à disposer d'un mélange de gaz d'échappement et d'ammoniac en amont du catalyseur SCR (5, 5', 5", 5"'),
dispositif **caractérisé en ce que**
- la quantité ajoutée d'agents réducteurs et le dimensionnement du catalyseur d'oxydation NH₃ (6, 6', 6", 6"') sont définis de façon qu'en aval du catalyseur d'oxydation NH₃ (6, 6', 6", 6"'), il subsiste une quantité résiduelle d'ammoniac dans les gaz d'échappement, et
- pour qu'en aval du catalyseur d'oxydation NH₃ (6, 6', 6", 6"'), au moins un second catalyseur SCR (7, 7', 7", 7"') transforme la quantité résiduelle d'ammoniac à l'aide des oxydes d'azote formés dans le catalyseur d'oxydation NH₃ (6, 6', 6", 6"') en azote et en vapeur d'eau.

2. Dispositif selon la revendication 1,
**caractérisé par**
au moins un second catalyseur d'oxydation NH₃ (8, 8', 8") en aval du second catalyseur SCR (7, 7', 7", 7"').

3. Dispositif selon la revendication 2,
**caractérisé en ce que**
le second catalyseur d'oxydation NH₃ (8') est suivi d'au moins un autre catalyseur SCR (9) ou d'autres catalyseurs SCR (9) et de catalyseurs d'oxydation NH₃ (10), en alternance,
le dispositif se terminant par un catalyseur SCR ou un catalyseur d'oxydation NH₃.

4. Dispositif selon l'une des revendications précédentes,
**caractérisé en ce que**
les compositions des catalyseurs SCR respectifs (5, 7 ou 5', 7' ou 5", 7", 9 ou 5"', 7"') sont différentes le long de la direction d'écoulement des gaz d'échappement.

5. Dispositif selon l'une des revendications précédentes,
**caractérisé en ce que**
les compositions des catalyseurs d'oxydation NH₃ respectifs (6', 8 ou 6", 8', 10 ou 6"', 8") sont différentes le long de la direction d'écoulement.

6. Dispositif selon l'une des revendications précédentes,
**caractérisé en ce que**
la première combinaison comprenant le catalyseur SCR (5, 5', 5", 5"') et le catalyseur d'oxydation NH₃ (6, 6', 6", 6"'), est optimisée de manière sélective par les matériaux catalyseurs actifs utilisés, et
les autres catalyseurs SCR (7, 7', 7", 7"', 9), suivants, et les catalyseurs d'oxydation NH₃ (8, 8', 8", 10), sont optimisés pour avoir des taux de conversion, élevés, par les matériaux catalyseurs actifs utilisés.

7. Dispositif selon l'une des revendications 1 à 6,
**caractérisé en ce qu'**
au moins une partie des catalyseurs SCR (5, 5', 5", 5"', 7, 7', 7", 7"', 9) contient de l'oxyde de vanadium V₂O₅ comme composant actif.

8. Dispositif selon l'une des revendications 1 à 6,
**caractérisé en ce qu'**
au moins une partie des catalyseurs SCR (5, 5', 5", 5"', 7, 7', 7", 7"', 9) contient des zéolithes avec du fer et/ou du cuivre et/ou du cobalt.

9. Dispositif selon la revendication 8,
**caractérisé en ce que**
les zéolithes sont du type ZSM-5 et/ou OSI et/ou EPI et/ou AEN et/ou MFI et/ou FAU et/ou BEA.

10. Dispositif selon l'une des revendications 1 à 6,
**caractérisé en ce que**
les catalyseurs d'oxydation NH₃ (6, 6', 6", 6"', 8, 8', 8", 8"', 10), contiennent comme composants actifs du platine et/ou du palladium et/ou du rhodium et/ou de l'iridium et/ou des oxydes de ces métaux.

11. Dispositif selon l'une des revendications 1 à 6,
**caractérisé en ce que**
les catalyseurs SCR (5, 5', 5", 5"', 7, 7', 7", 7"', 9) et/ou les catalyseurs d'oxydation NH₃ (6, 6', 6", 6"', 8, 8', 8", 10), sont des catalyseurs pleins ou des catalyseurs à revêtement sur un support métallique ou un support en céramique.

12. Dispositif selon l'une des revendications 1 à 6,
**caractérisé en ce que**
les catalyseurs (5"', 7"') et les catalyseurs d'oxydation NH₃ (6"', 8"), sont réalisés sur un support commun.
